# EUROPEAN PATENT APPLICATION

(11) **EP 4 167 328 A1**
(43) Date of publication of application: **19.04.2023**
(21) Application number: 22199235.7
(22) Date of filing: 30.09.2022
(51) Int. Cl.: H01M 8/0239, H01M 8/0245, H01M 8/18, H01M 8/20

(54) **PBI-BASED MEMBRANE DOPED WITH SULFURIC ACID-CONTAINING SOLUTION HAVING IMPROVED PERFORMANCE, PREPARATION METHOD THEREOF, AND USE THEREOF**

(30) Priority: 12.10.2021 KR 20210135191
(71) Applicant: Korea Institute of Science and Technology, Seoul 02792 (KR)
(72) Inventor: HENKENSMEIER, Dirk, 02792 Seoul (KR); DO, Huy Xuan, 02792 Seoul (KR); HA, Heung Yong, 02792 Seoul (KR); ABBAS, Saleem, 02792 Seoul (KR); IKHSAN, Muhammad Mara, 02792 Seoul (KR); PARK, Hyun S., 02792 Seoul (KR); PARK, Hee-Young, 02792 Seoul (KR); LEE, So Young, 02792 Seoul (KR); KIM, Hyoung-Juhn, Seoul (KR); JANG, Jong Hyun, 02792 Seoul (KR); HAN, Jonghee, 02792 Seoul (KR)
(74) Representative: advotec.

(57) **Abstract**

The present invention relates to a PBI-based membrane doped with sulfuric acid-containing solution having improved performance, preparation method thereof, and use thereof.

## Description

### [Technical Field]

The present invention relates to a PBI-based membrane doped with sulfuric acid-containing solution having improved performance, preparation method thereof, and use thereof.

### [Background Art]

Increasing utilization of renewable energy such as wind and solar energy is to replace traditional fossil fuels in the recent years, and low-cost and high-performance energy storage systems (ESS) are absolutely required in order to integrate in smart grid management. High-energy density lithium ion batteries have been used for this purpose, but frequent fires, such as one 20 MW ESS that burned in Belgium in 2017 and 15 ESSs that burned in Korea in 2018, raise safety concerns. Therefore, redox flow batteries (RFBs), one type of the most promising stationary energy storage technologies, may be an alternative since they can offer many advantages including scalability, long cycle life, low cost, large capacity, and safety. RFBs are composed of membranes, electrolytes, electrodes, and cathode and anode chambers. The inevitable cross-contamination of redox couples is a key issue in RFBs, and vanadium RFBs (VRFBs), one type of the most advanced systems, can easily handle this issue by way of a simple re-balancing operation for electrolyte solutions.

An ion exchange membrane, a key component of VRFB systems, has a very important role in separating positive and negative electrolytes while enabling proton exchange, resulting in effects on battery capacity, lifespan, and cost. Therefore, membranes for VRFBs should possess high ionic conductivity, strongly block vanadium crossover, high chemical stability, and low cost. Commercial Nafion membranes are widely used for VRFB systems due to their high proton conductivity and chemical stability. However, Nafion membranes exhibit a high vanadium ion crossover rate, which results in capacity loss over time and coulombic efficiency reduction. The biggest reason limiting use of Nafion membranes is their high cost.

### [Disclosure]

### [Technical Problem]

An aspect of the present invention is to provide a method for preparing a conductive membrane, the method comprising: a first step of forming a membrane from a solution of polybenzimidazole (PBI) dissolved in phosphoric acid; a second step of immersing the membrane in a first aqueous solution of sulfuric acid with a concentration of more than 8 M and less than or equal to 17 M; and a third step of equilibrating the membrane obtained in the previous step by immersion in a second aqueous solution of sulfuric acid.

Another aspect of the present invention is to provide a composite membrane comprising: two conductive membranes prepared by the method; and one or more additional conductive membrane(s) being sandwiched between the two conductive membranes.

Still another aspect of the present invention is to provide a redox flow battery comprising the composite membrane as a separator.

Still another aspect of the present invention is to provide an electrochemical system comprising the composite membrane.

### [Technical Solution]

Each description and embodiment disclosed herein may also be applied to other descriptions and embodiments. That is, all combinations of various elements disclosed herein fall within the scope of the present disclosure. Further, the scope of the present invention is not limited by the specific description below.

Furthermore, those skilled in the art will recognize, or be able to ascertain using no more than routine experimentation, many equivalents to the specific embodiments of the invention described herein. Further, these equivalents should be interpreted to fall within the scope of the present invention.

In addition, throughout this specification, when a part is referred to as "including" or "containing" an element, it will be understood that other elements may be further included rather than other elements being excluded unless content to the contrary is specially described.

Hereinafter, the present invention will be described in detail.

In accordance with a first aspect of the present invention, there is provided a method for preparing a conductive membrane, the method comprising: a first step of forming a membrane from a solution of polybenzimidazole (PBI) dissolved in phosphoric acid; a second step of immersing the membrane in a first aqueous solution of sulfuric acid with a concentration of more than 8 M and less than or equal to 17 M; and a third step of equilibrating the membrane obtained in the previous step by immersion in a second aqueous solution of sulfuric acid.

The PBI-based polymer membrane used in the present invention is inherently ionic non-conductive, but an imidazole group contained therein includes a cationic NH group, which can be deprotonated by a base such as KOH, and a basic N group, which can be protonated by an acid, such as sulfuric acid or phosphoric acid, and thus the PBI-based polymer membrane may be modified to have ion conductivity by immersion in an acid or a base.

For example, the polybenzimidazole (PBI) may be one polymer; or a mixture, or co-polymer of two or more selected from the group consisting of *meta-*PBI, *para*-PBI, ab-PBI, 20H-PBI, O-PBI, PBI-OO, 4,4'-(hexafluoroisopropylidene)bis(benzoic acid) (PBI-HFA), PBI-OH, sulfonated *para-*PBI, pyridine-modified PBI, fluorinated PBI, mesityl-PBI, terphenyl-PBI, hexamethyl-*p*-terphenyl PBI, and derivatives thereof.

For example, the first aqueous solution of sulfuric acid may be an 8 M to 14 M acid solution, but is not limited thereto.

For example, the second aqueous solution of sulfuric acid may further comprise vanadium ions, but is not limited thereto.

For example, the solution of PBI dissolved in phosphoric acid may further comprise 1 wt% to 10 wt% of an inorganic filler relative to the weight of PBI in the solution, but is not limited thereto.

The conductive membrane provided by the preparation method of the present invention is a gel membrane containing a large amount of moisture and can exhibit high ion conductivity as well as somewhat high vanadium ion permeability. Therefore, the conductive membrane is prepared by further containing the inorganic filler as above, so that a longer diffusion route through the membrane can be formed to reduce vanadium ion crossover. The membrane has an acid-doped phase and thus can promote proton conductivity. Therefore, the introduction of the inorganic filler can reduce the vanadium ion crossover while maintaining improved proton conductivity.

For example, the inorganic filler may be at least one selected from the group consisting of ZrO₂, SiO₂, phosphotungstic acid, TiO₂, graphene, graphene oxide, reduced graphene oxide, montmorrilonite, zeolite, zeolitic imidazolate framework (ZIF), and vanadium oxides, but is not limited thereto.

For example, the first step may be performed by i) filling pores of a porous support with the solution of PBI dissolved in phosphoric acid, ii) immersing a porous support in the solution of PBI dissolved in phosphoric acid, or iii) embedding a porous support in a wet-film type of PBI membrane, but is not limited thereto.

For example, the porous support may be a porous membrane made of polytetrafluoroethylene (PTFE), polyethylene (PE), polypropylene (PP), polyvinylidene fluoride (PVDF), or PBI, but is not limited thereto.

In accordance with a second aspect of the present invention, there is provided a composite membrane comprising: two conductive membranes prepared by the method of the first aspect; and one or more additional conductive membrane(s) being sandwiched between the two conductive membranes.

For example, the additional conductive membrane may be a PBI membrane, a perfluorinated sulfonic acid membrane, a non-fluorinated cation exchange membrane, or an anion exchange membrane.

The two conductive membranes each may be a gel-state membrane having a thickness of 10 µm to 100 µm, and the additional conductive membrane may be a membrane having a thickness of 1 µm to 15 µm, but these membranes are not limited thereto.

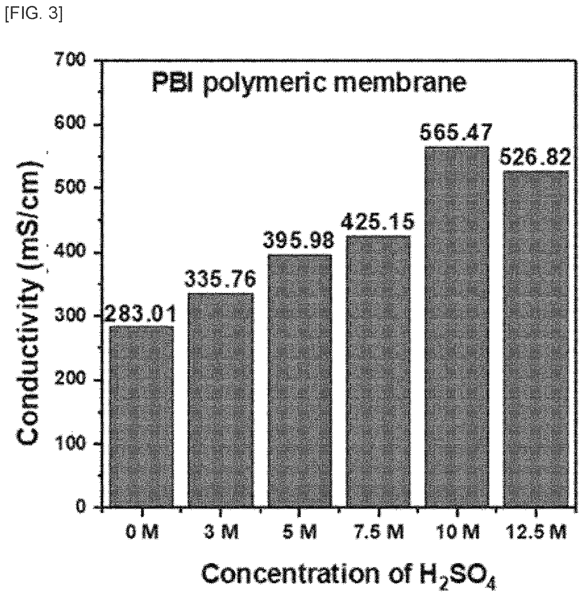

A specific exemplary embodiment of the present invention confirmed that a VRFB including a sandwich form of composite membrane in which a PBI membrane with a thickness of 2 µm was inserted between gel-state PBI membranes with a thickness of 60 µm prepared by the method according to the first aspect, when repeatedly charged and discharged for 130 cycles or more, showed high discharge capacity, voltage efficiency, energy efficiency, and current efficiency compared with a VRFB including an existing Nafion membrane with a thickness of 50 µm (FIG. 3). It was also confirmed that the VRFB membrane including the composite membrane showed stable performance and a high energy efficiency of 90% or more compared with a VRFB including, as a separator, another membrane that has been previously reported (Table 2).

In accordance with a third aspect of the present invention, there is provided a redox flow battery comprising the composite membrane according to the second aspect as a separator.

As used herein, the term "redox flow battery" refers to a type of rechargeable battery in which an electrolyte containing electroactive species flows through an electrochemical cell that reversibly converts chemical energy directly into electricity, and is a reversible battery in which all electroactive components are dissolved in the electrolyte. A gravity feed system is often used, but usually, an additional electrolyte is generally stored in a separate tank outside and supplied to a cell by a pump. A flow battery can be quickly recharged by simultaneously performing the replacement of an electrolytic solution (in a manner similar to the refilling of a fuel tank of an internal combustion engine) and the recovery of materials consumed for re-energization. In such a redox flow battery, the energy of the battery is determined by the electrolyte volume, for example, a tank size, and the power is determined by the electrode area, for example, a reactor size, and thus energy is completely decoupled from the power source like in other batteries.

Such a redox flow battery, unlike other batteries, has electroactive species, which are present as ions in the state of an aqueous solution rather than a solid, and has a mechanism in which energy is stored by oxidation/reduction of respective ions at a cathode and an anode. The redox flow battery has a circulation system in which a catholyte and an anolyte for causing the above-described reactions are stored in separate storage tanks, introduced into a cell housing through electrolyte inlets formed in the cell housing, contacted with a cathode and an anode to cause reactions, and then outflow to the outside through electrolyte outlets. The battery is discharged when it is connected to an external circuit containing an electrical load thereby making the current flow out of the cell. Conversely, the battery is charged when the battery is connected to an external power source to make the current flow into the battery. In general, the catholyte solution (catholyte) is charged when a redox couple is oxidized into a higher state of two types of valence states, and is discharged when reduced into a lower state thereof. The opposite phenomenon occurs in the anolyte solution.

As described above, most redox flow batteries are composed of two separate electrolyte solutions. One stores electroactive substances in an anode reaction, and the other is used in a cathode reaction. This will be reversely applied during charging. Afresh or used electrolyte may be circulated and stored in a single storage tank. Or the concentrations of the electroactive substances may be regulated individually. An ion exchange membrane may be used as a separator to prevent the mixing of electroactive species that may cause chemical power failures.

As used herein, the term "separator" refers to an ion exchange membrane which is introduced to prevent the mixing of electroactive species in the redox flow battery, wherein in both of the electrodes separated by the separator, only common counter ion carriers may pass through the separator. For example, in a bromine-polysulfide system in which Na₂S₂ is converted to Na₂S₄ at the anode and Br₂ is converted to 2Br⁻ at the cathode, an excess of Na⁺ ions at the anode are transferred to the cathode to maintain the electrically neutral state. Similarly, in a vanadium system in which V²⁺ is oxidized to V³⁺ at the anode and V⁵⁺ is reduced to V⁴⁺ at the cathode, protons and hydronium ions (H₃O⁺) are transferred from the anode to the cathode via a proton conductive membrane.

In an actual redox flow battery, the electrolyte reaction is different between the cathode and the anode, and there is a flow phenomenon of the electrolyte solution, such that a pressure difference occurs between the cathode side and the anode side. Therefore, the separator preferably has excellent physical strength such that the separator is not destroyed by such a pressure difference.

The redox flow battery of the present invention is characterized in that a catholyte and a cathode are provided at one side of the separator, and an anolyte and an anode are provided at the other side thereof.

For the cathode and the anode, an electrode material that is commonly used in the art may be used. For example, carbon felt, carbon non-woven fabric, graphite felt, graphite plate, or the like may be used, but are not limited thereto.

As for an example of a redox flow battery, the redox flow battery of the present invention may comprise: a cell housing having a predetermined size; a separator installed across the center of the cell housing; a cathode electrode and an anode electrode located on both left/right sides respectively, which are separated by the separator inside the cell housing; a catholyte inlet and a catholyte outlet, which are formed in the upper/lower side of the cell housing at the side of location of the cathode to perform inflow and outflow of the electrolyte used in the cathode; and an anolyte inlet and an anolyte outlet, which are formed in the upper/lower side of the cell housing at the side of location of the anode to perform inflow and outflow of the electrolyte used in the anode.

For example, the redox flow battery of the present invention may be all-vanadium-based redox batteries, which use a V(IV)/V(V) redox couple as the catholyte and a V(II)/V(III) redox couple as the anolyte; or other metal-based redox batteries, which use an Fe(II)/Fe(III) redox couple as the catholyte and a V(II)/V(III) redox couple as the anolyte, but the present invention is not limited thereto.

In accordance with a fourth aspect of the present invention, there is provided a redox flow battery comprising the composite membrane according to the second aspect.

Examples of the electrochemical system may be electrolyzers, fuel cells, or batteries, but are not limited thereto. For example, the membrane of the present invention has improved ion conductivity and/or selectivity, and thus may be provided as a separator for blocking the crossover of a fuel and an oxidizer in a fuel cell, oxidizing and reducing active species in a battery, and/or hydrogen and oxygen in an electrolyzer, or to separate an anode and a cathode in general electrochemical systems.

### [Advantageous Effects]

The present invention can provide a membrane with improved conductivity in the manufacture of a PBI-based membrane, by preparing a membrane from a solution of PBI dissolved in phosphoric acid and pre-treating the membrane with a high concentration of sulfuric acid, followed by equilibration with sulfuric acid having a similar concentration to an electrolyte used in a battery, and such a provided membrane is combined with another membrane to form a composite membrane and thus can configure a VFRB having excellent performance compared with an existing Nafion membrane.

### [Brief Description of Drawings]

FIG. 1 shows the FTIR spectrum of the additive ABPBI-g-GO prepared in Example 6. As comparative examples, ABPBI and GO prior to modification were used.
FIG. 2 shows a TGA curve of the additive ABPBI-g-GO prepared in Example 6. As a comparative example, GO prior to modification was used.
FIG. 3 shows conductivity measured for PBI membranes which are cast from a phosphoric acid solution, immersed in a sulfuric acid with various concentrations, and then equilibrated in a 3 M sulfuric acid solution.
FIG. 4 shows conductivity measured for PBI membranes which are cast from phosphoric acid solution containing various contents of zirconium oxide (ZrO₂) particles, immersed in a 10 M sulfuric acid solution, and then equilibrated in a 3 M sulfuric acid solution.
FIG. 5 shows the performance of a VFRB comprising a sandwich form of composite membrane by combining 60 µm-thick gel-type PBI membranes and a 2 µm-thick PBI membrane, prepared by a preparation method according to an exemplary embodiment of the present invention.

### [Detailed Description of the Invention]

Hereinafter, the present invention will be described in detail with reference to exemplary embodiments. However, these exemplary embodiments are for illustrative purposes only, and the scope of the present invention is not intended to be limited by these exemplary embodiments.

### Example 1: Preparation of conductive membrane from phosphoric acid solution containing polybenzimidazole

### Step 1: Preparation of PBI membrane from phosphoric acid solution containing polybenzimidazole

mPBI and phosphoric acid weighed at a predetermined ratio were placed together in a 250 mL three-neck flask. The flask was equipped with an overhead stirrer and argon gas inlet and outlet. The solution was heated to 190°C overnight to completely dissolve mPBI in phosphoric acid. The obtained solution was cast on a clean glass plate by a doctor blade, thereby preparing a membrane.

### Step 2: Pre-treatment with high concentration of sulfuric acid solution

The membrane prepared in step 1 was immediately immersed in a sulfuric acid solution having a concentration of 0 M to 12.5 M and maintained at room temperature for 48 hours.

### Step 3: Equilibration with 3 M sulfuric acid solution

The membrane untreated or pre-treated with the sulfuric acid solution in step 2 was immersed in a 3 M sulfuric acid solution, which was a supporting electrolyte solution, for 24 hours to equilibrate acid doping in the membrane.

### Example 2: Preparation of PBI-based conductive membrane containing zirconia particles

First, PBI was dissolved in phosphoric acid at 190°C under an argon atmosphere. Separately, ZrO₂ was uniformly dispersed in phosphoric acid by sonication for 1 hour (0.2 g/mL). The ZrO₂ solution was added dropwise to the previously prepared PBI solution, followed by stirring at 160°C for 1 hour. Thereafter, the obtained solution was cast on a clean glass plate by a doctor blade to thereby prepare a membrane. The membrane prepared as described above was immersed in 10 M sulfuric acid at room temperature for 48 hours, and then prior to characterization, immersed in 3 M sulfuric acid at room temperature for 24 hours to equilibrate acid doping.

### Example 3: Preparation of PBI-based conductive membrane containing porous support

An mPBI polymer (2 g) was added to 18 g of a dry DMAc solvent, followed by stirring at 80°C overnight. The solution was cooled to room temperature, and filtered through a 1 µm syringe filter to remove undissolved particles. Prior to being cast on a glass plate, the solution was degassed by sonication for 30 minutes. The formed membrane was placed in an oven preheated to 60°C for 2 hours, without vacuum, and continuously dried at 80°C for 24 hours under vacuum. The obtained membrane was peeled off from the glass substrate, and immersed in a 3 M sulfuric acid solution for 24 hours prior to use.

### Example 4: Preparation of multi-layer composite membrane

A gel/thin film/gel layered membrane was prepared by simple layer-by-layer assembly in a state wet with a supporting electrolyte. A thin blocking membrane was placed between two outer layers formed of the same gel membrane. Air bubbles were carefully removed by hand sweeping.

### Example 5: Configuration of VRFB

A VRFB containing the multi-layer composite membrane prepared in Example 4 was configured by way of a common method.

### Example 6: Preparation of gel composite membrane based on PBI and ABPBI-grafted-GO

### Step 1: Preparation of ABPBI-g-GO as additive

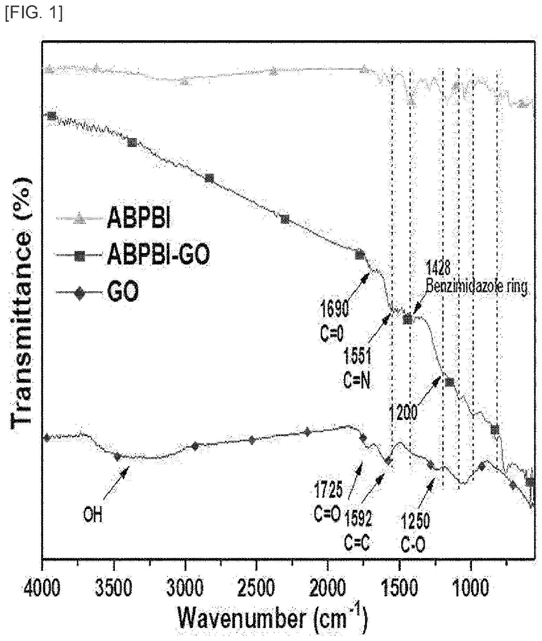

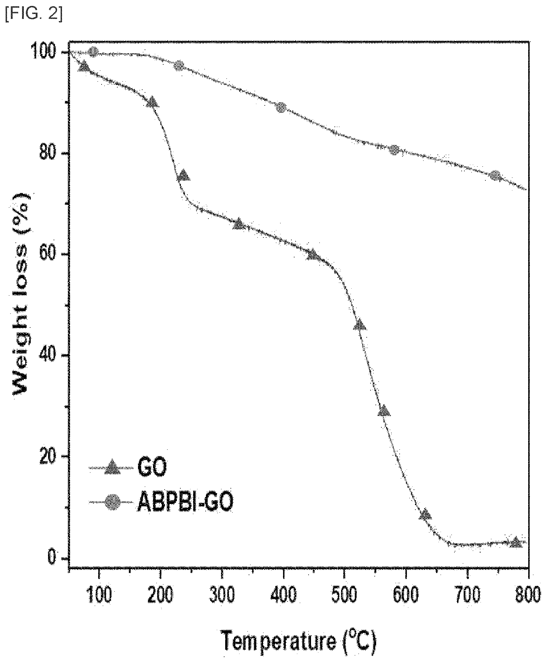

To enhance the mechanical strength and ion selectivity of a gel membrane, a membrane was prepared by addition of graphene oxide (GO), a 2D material. First, GO was functionalized with poly(2,5-benzimidazole) (ABPBI) by the following procedure. By tip sonication at 5°C for 60 minutes, 0.5 g of GO was dispersed in 200 mL of a dry DMAc solvent. Separately, 3,4-diaminobenzoic acid (DABA) was dissolved in 20 mL of DMAc. In a 500 mL round flask, 2.5 g of PPA and 30 mL of a dry DMAc solvent were mixed. The three solutions were mixed and stirred at 160°C for 1 hour. After the resultant solution was cooled to room temperature, extra ABPBI in the solution was removed by centrifugation three times. The obtained product was dried at 80°C for 24 hours under vacuum. The obtained ABPBI-g-GO was analyzed by FTIR and TGA, and the results thereof are shown in FIGS. 1 and 2, respectively.

### Step 2: Preparation of PBI/ABPBI-q-GO gel composite membrane

The ABPBI-g-GO prepared in step 1 was dispersed in PA by tip sonication at 5°C for 20 minutes. Separately, PBI was dissolved in PA at 190°C for 24 hours. Thereafter, the ABPBI-g-GO solution was slowly added dropwise to the PBI solution at 160°C for 1 hour. The mixture of the solutions was cast on a clean glass plate and immersed in 3 M sulfuric acid, thereby forming a gel composite membrane. After immersion in 3 M sulfuric acid for 2 days, the gel composite membrane was measured for conductivity and vanadium ion permeability. The conductivity was measured as 494.18 mS/cm, and the vanadium ion crossover was measured as 3.42×10⁻⁷ cm²/s.

### Experimental Example 1: Comparison of difference according to preparation process

The preparation process according to the present invention was compared with a known similar preparation process using polyphosphoric acid, and the comparison results are shown in Table 1 below.

**TABLE 1**

| US 2020/0091536 A1 | | Present invention | |
|---|---|---|---|
| Process step | Time | Process step | Time |
| PBI polymerization in PPA | 16-24 hours^{a} | PBI solution in phosphoric acid | 1 day |
| | 48 hours^{b} | | |
| Membrane casting (30 cm) | <5 minutes | Membrane casting (30 cm) | <5 minutes |
| PPA hydrolysis | 24 hours^{a,b} | Cooling to room temperature | <5 minutes |
| Immersion in supporting electrolyte | 24 hours | Immersion in supporting electrolyte | 24 hours |
| Total time | 3-4 Days | Total time | 2 days |

| | | | |
|---|---|---|---|
| a: Chem. Mater., 2005, 17:5328-5333, b: US 2020/0091536 A1 | | | |

As shown in Table 1, the time required for polymerization of PBI and hydrolysis of PPA can be reduced by several days. Since the membranes prepared by the methods disclosed in the documents are not self-supporting, the hydrolysis of PPA needs to be performed on a support, thus requiring a long climate chamber, so that large-scale equipment and space are required for the production of large-area membranes. However, in the preparation method of the present invention, the time required to prepare the membrane is short, and the prepared membrane can quickly become self-supporting, and thus a long step including the pre-treatment with a sulfuric acid solution, equilibration, immersion in a supporting electrolyte, and the like can be done by winding the membrane on three or four rolls through a water tank, thereby enabling fast production speed without long machines, solving the factory area issue.

### Experimental Example 2: Measurement of conductivity and comparison of conductivity and vanadium ion permeability by difference in preparation process

For conductivity measurement, a membrane or a multilayer composite membrane was assembled between two narrow chambers filled with sulfuric acid. At a fixed distance to the membrane, electrochemical impedance spectroscopy (EIS, Zahner IM6) was measured using a platinum disc electrode (area: 1.767 cm²). The resistance versus the membrane stack thickness was plotted to obtain a linear slope pattern. The through-plane conductivity was obtained by 1/(slope × electrode area).

The membrane prepared in Example 1 showed an increase in conductivity from 283 mS/cm to 565.47 mS/cm depending on the concentration of sulfuric acid in the pre-treatment step (FIG. 3).

The conductivity and VO²⁺ permeability depending on the membrane preparation method were summarized in Table 2 below. The membrane of the present invention cast from the phosphoric acid solution showed high conductivity due to the absorption of an excess of water, but the membrane cast from DMAc showed significantly low conductivity and VO²⁺ permeability due to a lower water absorption rate despite of the pre-treatment with a 12 M high concentration of sulfuric acid solution and equilibration with a 2 M sulfuric acid solution. The membrane cast from PPA showed somewhat higher conductivity and VO²⁺ permeability compared with the membrane of the present invention, and specifically showed a conductivity increase of merely 4.8% but a VO²⁺ permeability increase of about 63%, which indicates that the conductivity was somewhat increased while the vanadium ion blocking performance was significantly degraded.

**TABLE 2**

| Sample | Absorbed sulfuric acid/water solution (wt%) | Conductivity (mS/cm) | VO²⁺ permeability (cm²/s) |
|---|---|---|---|
| Casting from phosphoric acid, equilibration with 3 M sulfuric acid (Present invention) | 447 | 565 | 3.5×10⁻⁷ |
| Casting from DMAc, pre-treatment with 12 M sulfuric acid Equilibration with 2 M sulfuric acid solution (KR 10-2021-0053719) | -65 | 12 | 1.5×10⁻¹⁰ |
| Casting from PPA, introduction of additional sulfuric acid group (J. Electrochem. Soc., 2019, 166(8):A1449-A1455) | 432 | 592.7 | 5.7×10⁻⁷ |

### Experimental Example 3: Change in conductivity by addition of zirconia particles

In general, conductivity and permeability are affected by openness of a structure and follow the same trend. Therefore, a decrease in conductivity indicates a decrease in vanadium crossover.

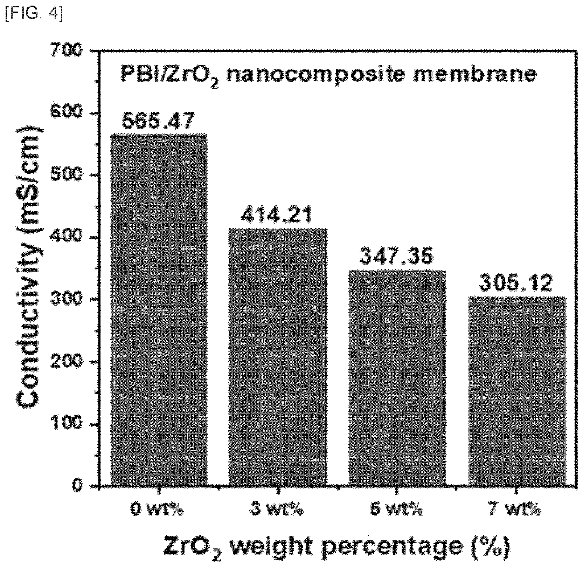

The membranes containing various contents of zirconia particles prepared in Example 2 were measured for conductivity, and the results are shown in FIG. 4. As shown in FIG. 4, the conductivity decreased as the zirconia content increased, indicating that the vanadium crossover decreased as the zirconia content increased.

### Experimental Example 4: Evaluation of VRFB performance

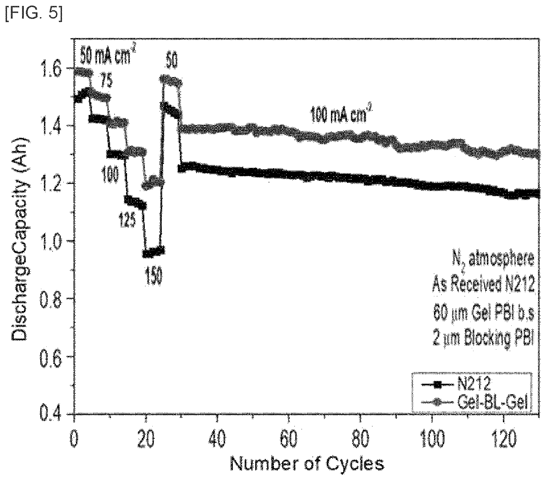

The VRFB manufactured in Example 5 was measured for discharge capacity, voltage efficiency, energy efficiency, and current efficiency, and the results are shown in FIG. 5. As a comparative example, a VRFB including Nafion 212 was used. As shown in FIG. 5, the VRFB prepared in Example 5 showed excellent performance in all the sections compared with the VRFB including Nafion 212.

In addition, VRFBs including various membranes were compared with respect to the conventionally reported performance and energy efficiency value in Table 3 below. As shown in Table 3, the VRFB including the composite membrane of the present invention showed a high energy efficiency of 91.1% while exhibiting stable performance.

**TABLE 3**

| Energy efficiency @ 80 mA/cm²(%) | Comments | Source |
|---|---|---|
| 91.3 | Alkali pre-swollen PBI (5 µm thick) Unstable performance | Chem. Eng. J., 2021, 407: 126574 |
| **91.1** | **60 µm PBI/2 µm PBI/60 µm PBI Stable performance** | **Present invention** |
| 90.1 | 34 µm thick porous O-PBI | Energy Environ. Sci., 2016, 9: 441 |
| 88.3 | Anion exchange membrane | Adv. Funct. Mater., 2015, 25: 2583-2589 |
| 87.9 | Sulfonated fluorinated poly(ether ether ketone) | Polym. Chem., 2015, 6: 5385 |
| 88.3 | Nafion 212 | Molecules, 2021, 26: 1679 |
| 88.3 | PBI thin film supported by porous PP | Molecules, 2021, 26: 1679 |
| 83.3 | Nafion 212 | J. Membr. Sci., 2019, 591: 117333 |
| 83.1 | Fumatech FAP-450 | Molecules, 2021, 26: 1679 |
| 82.5 | Nafion 115 | Energy Environ. Sci., 2016, 9: 441 |

### Abbreviations

PPA: Polyphosphoric acid
PA: Phosphoric acid
SA: Sulfuric acid
VRFB: Vanadium redox flow battery
PBI: polybenzimidazole
DMAc: *N*,*N*'-dimethylacetamide

While the present invention has been described with reference to the particular illustrative embodiments, a person skilled in the art to which the present invention pertains can understand that the present invention may be embodied in other specific forms without departing from the technical spirit or essential characteristics thereof. Therefore, the embodiments described above should be construed as being exemplified and not limiting the present invention. The scope of the present invention is not defined by the detailed description as set forth above but by the accompanying claims of the invention, and it should also be understood that all changes or modifications derived from the definitions and scopes of the claims and their equivalents fall within the scope of the invention.

## Claims

1. A method for preparing a conductive membrane, the method comprising:
a first step of forming a membrane from a solution of polybenzimidazole (PBI) dissolved in phosphoric acid;
a second step of immersing the membrane in a first aqueous solution of sulfuric acid with a concentration of more than 8 M and less than or equal to 17 M; and
a third step of equilibrating the membrane obtained in the previous step by immersion in a second aqueous solution of sulfuric acid.

2. The method of claim 1, wherein the polybenzimidazole (PBI) is one polymer; or a mixture, or co-polymer of two or more selected from the group consisting of meta-PBI, para-PBI, ab-PBI, 2OH-PBI, O-PBI, PBI-OO, 4,4'-(hexafluoroisopropylidene)bis(benzoic acid) (PBI-HFA), PBI-OH, sulfonated para-PBI, pyridine-modified PBI, fluorinated PBI, mesityl-PBI, terphenyl-PBI, hexamethyl-p-terphenyl PBI, and derivatives thereof.

3. The method of claim 1 or 2, wherein the first aqueous solution of sulfuric acid is an 8 M to 14 M acid solution.

4. The method of claim 3, wherein the second aqueous solution of sulfuric acid further comprises vanadium ions.

5. The method of one of claims 1 to 4, wherein the solution of PBI dissolved in phosphoric acid further comprises 1 wt% to 10 wt% of an inorganic filler relative to the weight of PBI in the solution.

6. The method of claim 5, wherein the inorganic filler is at least one selected from the group consisting of ZrO₂, SiO₂, phosphotungstic acid, TiO₂, graphene, graphene oxide, reduced graphene oxide, montmorrilonite, zeolite, zeolitic imidazolate framework (ZIF), and vanadium oxides.

7. The method of one of claims 1 to 6, wherein the first step is performed by i) filling pores of a porous support with the solution of PBI dissolved in phosphoric acid, ii) immersing a porous support in the solution of PBI dissolved in phosphoric acid, or iii) embedding a porous support in a wet-film type of PBI membrane.

8. The method of claim 7, wherein the porous support is a porous membrane made of polytetrafluoroethylene (PTFE), polyethylene (PE), polypropylene (PP), polyvinylidene fluoride (PVDF), or PBI.

9. A composite membrane comprising: two conductive membranes prepared by any one of claims 1 to 8; and one or more additional conductive membrane(s) being sandwiched between the two conductive membranes.

10. The composite membrane of claim 9, wherein the additional conductive membrane is a PBI membrane, a perfluorinated sulfonic acid membrane, a non-fluorinated cation exchange membrane, or an anion exchange membrane.

11. The composite membrane of claim 9 or 10, wherein the two conductive membranes each are a gel-state membrane having a thickness of 10 µm to 100 µm.

12. The composite membrane of one of claims 9 to 11, wherein the additional conductive membrane has a thickness of 1 µm to 15 µm.

13. A redox flow battery comprising the composite membrane of one of claims 9 to 12 as a separator.

14. An electrochemical system comprising the composite membrane of one of claims 9 to 13.
